# EUROPÄISCHE PATENTSCHRIFT

(11) **EP 2 673 098 B1**
(45) Veröffentlichungstag und Bekanntmachung des Hinweises auf die Patenterteilung: **31.12.2014**
(21) Anmeldenummer: 12707249.4
(22) Anmeldetag: 10.02.2012
(51) Int. Cl.: B21D 39/02

(54) **FALZWERKZEUG UND FALZVERFAHREN**
FOLDING TOOL AND FOLDING METHOD
OUTIL DE PLIAGE ET PROCÉDÉ DE PLIAGE

(30) Priorität: 11.02.2011 DE 202011000315 U
(43) Veröffentlichungstag der Anmeldung: 18.12.2013
(73) Patentinhaber: KUKA Systems GmbH, 86165 Augsburg (DE)
(72) Erfinder: KRAUS, Johann, 86690 Mertingen (DE); NEIDER, Reinhold, 86462 Langweid (DE)
(74) Vertreter: Ernicke, Klaus Stefan
(86) Internationale Anmeldenummer: PCT/EP2012/052288
(87) Internationale Veröffentlichungsnummer: WO 2012/107553

(56) Entgegenhaltungen:
- WO-A2-2005/056444
- DE-A1- 10 011 854
- DE-A1-102007 036 704
- DE-U1-202009 005 111
- KR-A- 20100 028 349
- US-A1- 2010 313 621

## Beschreibung

Die Erfindung betrifft ein manipulatorgeführtes Falzwerkzeug, insbesondere einen Rollenfalzkopf, und ein Falzverfahren mit den Merkmalen im Oberbegriff des Vorrichtungsanspruchs 1 und des Verfahrensanspruchs 14.

Ein solches manipulatorgeführtes Falzwerkzeug sowie ein Falzverfahren sind aus der DE 10 2007 036 704 A1 bekannt. Am Schaft des Rollenfalzkopfes befinden sich Dehnungsmessstreifen, die mit einem distanziert am Roboterarm angeordneten Messverstärker und einer an gleicher Stelle befindlichen Robotersteuerung verbunden sind. An die Robotersteuerung ist über ein Kabel ein externes Roboterbedienterminal mit einer alphanummerischen Druckanzeige für die gemessenen Falzkräfte angeschlossen.

Ein anderes manipulator- oder robotergeführtes Falzwerkzeug ist aus der Praxis bekannt. Die beim Falzen auftretenden Druckkräfte werden mit einer Kraftmessdose gemessen, die an der Verbindungsstelle zwischen Falzwerkzeug und Roboterhand angeordnet ist. Die Kraftmesswerte werden per Kabel an eine externe Anzeige übertragen, die der Bediener in der Hand halten oder an beliebiger Stelle am Falzbett oder anderswo ablegen kann. Die gemessenen Kräfte werden auf einem Anzeigedisplay in Ziffern dargestellt. Diese Erfassungstechnik hat verschiedene Nachteile. Sie lässt sich insbesondere beim Einrichten und Programmieren eines Falzroboters nicht optimal einsetzen.

Es ist Aufgabe der Erfindung, eine Falztechnik mit einer besseren Erfassungstechnik aufzuzeigen.

Die Erfindung löst diese Aufgabe mit den Merkmalen im Verfahrens- und Vorrichtungshauptanspruch.

Bei der beanspruchten Falztechnik ist die Anzeige am Falzwerkzeug angeordnet und vorzugsweise fest angebaut. Dies hat verschiedene Vorteile. Zum einen kann die Erfassungseinrichtung nicht nur beim Einrichten, sondern auch im Serienbetrieb benutzt werden. Einem Bediener kann die aktuelle Werkzeugbelastung und auch die damit einhergehende Roboterbelastung direkt am Falzwerkzeug und damit an einer optisch prominenten Stelle angezeigt werden. Die Erkennbarkeit der Anzeige und die Verarbeitbarkeit der Anzeigeinformation für einen Bediener werden dadurch signifikant verbessert. Beim Einrichten eines Falzroboters kann der Bediener das Falzwerkzeug und die Anzeige jederzeit im Blick haben und die angezeigten Belastungen direkt dem Falzort am Werkstück und dem zugehörigen Bahnpunkt in der programmierten Roboterbahn zuordnen.

Ferner ist es mit einem eigenen Erfindungsaspekt günstig, wenn die Anzeige als Bereichsanzeige für verschiedene Belastungsbereiche ausgebildet ist. Die Anzeigeinformation ist dadurch für den Bediener, insbesondere beim Einrichten, leichter verständlich und verwertbar. Den Bediener interessiert in erster Linie, ob die auftretenden Falzkräfte und die programmierten Eindringtiefen des Falzwerkzeugs am Werkstück im zulässigen Bereich liegen oder nicht. Diese Information kann ihm die Bereichsanzeige schnell und leicht erfassbar sowie unmissverständlich übermitteln. Die Information ist somit schneller verwertbar und mit anderen Informationen aus dem Bedienungs- oder Einrichtprozess kombinierbar und verarbeitbar. Die beim Stand der Technik erforderliche Zusatzüberlegung mit der Interpretation der angezeigten Zahlenwerte übernimmt die Erfassungseinrichtung und entlastet dadurch den Bediener.

Besonders günstig ist aus ergonomischen Gesichtspunkten eine optische Anzeige an einer gut sichtbaren Stelle des Falzwerkzeugs, wobei die Bereichsinformation z.B. durch verschiedenfarbige LED's oder andere Leuchten übermittelt wird. Die Bereichsanzeige kann hierbei auch in geeigneter Weise signalisieren, ob überhaupt ein Kontakt zwischen Falzwerkzeug und Werkstück besteht. Dies erleichtert einem Bediener, insbesondere beim Einrichten, wesentlich die Arbeit und bietet eine hohe Verlässlichkeit und Qualität. Ferner können Werkzeugschäden, z.B. verlorene oder beschädigte Falzelemente, z.B. Falzrollen, rechtzeitig detektiert und hieraus evtl. resultierende Schäden vermieden werden.

Ein weiterer Erfindungsaspekt liegt in der Art der Belastungserfassung. Bei einer ausweichfähigen Falzelement- oder Falzrollenanordnung können Wege gemessen und hieraus Kräfte berechnet werden. Andererseits sind die Weginformationen selbst als Angabe über die Eindringtiefe des Falzwerkzeugs am Werkstück interessant. Der Informationsumfang bei einer Wegmessung kann größer als bei einer reinen Kraftmessung sein. Eine Wegmessung lässt sich an beliebig geeigneter Stelle des Falzwerkzeugs unterbringen. Dies kann insbesondere im Bereich der Falzelemente selbst sein oder eine ausweichfähige Lagerung der Falzelemente, insbesondere Falzrollen, am Gestell des Falzwerkzeugs betreffen. Es kann alternativ aber auch das Falzwerkzeug als Ganzes ausweichfähig, insbesondere federnd, an einer Roboterhand angeschlossen sein. Diese Belastungserfassung hat eigenständige Bedeutung und kann auch bei anderen konventionellen Falzwerkzeugen eingesetzt werden, die nicht mit einer Belastungsanzeige oder mit einer Belastungsanzeige an anderer Stelle ausgestattet sind.

Ein weiterer Erfindungsaspekt betrifft die Ausbildung einer ausweichfähigen Falzelement- oder Falzrollenlagerung. Hierfür wird eine nach entgegengesetzten Richtungen und somit beidseitig ausweichfähige Lagerung vorgeschlagen, die einen Einsatz des Falzwerkzeugs für das Aufbringen von Ziehkräften und/oder Druckkräften beim Falzen ermöglicht. Das Falzwerkzeug ist dadurch universell einsetzbar. Diese ausweichfähige Falzelement- oder Falzrollenlagerung hat eigenständige Bedeutung und kann auch bei anderen konventionellen Falzwerkzeugen eingesetzt werden, die nicht mit einer Belastungsanzeige oder mit einer Belastungsanzeige an anderer Stelle ausgestattet sind.

Die in mehreren Richtungen ausweichfähige Falzelement- oder Falzrollenlagerung kann außerdem mit einer entsprechenden mehrachsigen Belastungserfassung kombiniert werden. Die auftretenden Belastungen können in allen Betriebssituationen des Falzwerkzeugs erfasst werden, was besonders beim ziehenden Betrieb von Interesse ist, bei dem sich die Falzstelle häufig in einem verborgenen Bereich, z.B. an der Innenseite eines Radhausfalzes, befindet. Das beanspruchte Falzwerkzeug bietet eine optimale Lösung für eine beidseitig ausweichfähige Rollenlagerung und eine entsprechend beidseitige Belastungserfassung. Es ist eine geschützte Unterbringung im Inneren des Falzwerkzeugs möglich, wobei nur ein geringer Platzbedarf besteht. Auch der Bau- und Kostenaufwand ist gering. Die Funktionen des Falzwerkzeugs werden durch die integrierte Anordnung nicht beeinträchtigt. Es gibt auch keine negativen Auswirkungen auf Störbereiche etc..

Die Erfindung sieht ferner bevorzugt vor, dass die Belastungserfassung sich auf das Fertigfalzen und die dabei eingesetzten Fertigfalzrollen beschränkt. Beim Vorfalzen sind Probleme mit übermäßigen Eindringtiefen oder einer evtl. Überlastung wesentlich geringer oder können sogar gänzlich entfallen. Insofern kann hierfür auf eine Belastungserfassung ggf. verzichtet werden. Dies kommt andererseits einer integrierten Anordnung der Erfassungseinrichtung und der ausweichfähigen Rollenlagerung entgegen und sorgt durch eine Begrenzung der Wanddurchgriffe für eine hohe mechanische Stabilität des Falzwerkzeugs.

Die Erfassungseinrichtung und insbesondere deren Sensorik ist bevorzugt im Gestell und/oder an einem Falzelement angeordnet. Sie erfasst die auf das Falzwerkzeug einwirkenden Kräfte und ggf. Momente, wenn es vom Manipulator an das Werkstück zugestellt und zum Aufbringen der Falzkraft drückend oder ziehend angepresst wird.

Der Nutzen des Falzwerkzeugs und der Erfassungseinrichtung kann erweitert werden durch eine externe Signalverbindung zu einer Robotersteuerung oder dgl. Dies hat verschiedene Vorteile. Zum einen können die Messwerte bzw. Erfassungswerte für Wege und/oder Kräfte den gespeicherten Bahnpunkten direkt zugeordnet und bahn- oder zeitbezogen in der Robotersteuerung gespeichert werden. Die erfassten Werte können auch zur Qualitätssicherung oder zu anderen Zwecken ausgewertet und protokolliert werden.

Die vorgenannten Erfindungsaspekte können für eine optimale Lösung miteinander kombiniert werden. Sie können alternativ nur teilweise bzw. in Teilkombinationen zum Einsatz kommen. Außerdem lassen sich die Erfindungsaspekte mit vorbekannten Falzwerkzeugen und auch einem Falzwerkzeug nach dem eingangs genannten Stand der Technik kombinieren. Hierbei kann die Ziffernanzeige z.B. gegen eine Bereichsanzeige ausgetauscht werden. Die Auslegung des Falzwerkzeugs für Zieh- und Druckkräfte beim Falzen und die hierfür eingesetzte beidseits ausweichfähige Rollenlagerung können auch bei konventionellen Falzwerkzeugen ohne Erfassung und Anzeige von Belastungen, insbesondere Kräften oder Eindringtiefen, eingesetzt werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine schematische Ansicht einer Roboterfalzstation mit einem Roboter und einem Falzwerkzeug mit einer Erfassungseinrichtung und einer Anzeige für die Belastungen,
- Figur 2:: ein Falzwerkzeug mit einer Anzeige in Seitenansicht,
- Figur 3:: eine perspektivische Ansicht des Falzwerkzeugs mit Anzeige von Figur 2,
- Figur 4:: eine vergrößerte und abgebrochene Frontansicht der Anzeige,
- Figur 5:: einen Längsschnitt durch das Falzwerkzeug von Figur 2 und 3,
- Figur 6:: eine vergrößerte und abgebrochene Detaildarstellung einer ausweichfähigen Rollenlagerung des Falzwerkzeugs gemäß Figur 5,
- Figur 7:: eine perspektivische Anordnung einer anderen Roboterfalzstation mit einem ziehenden Falzwerkzeug an einer Fahrzeugkarosserie und
- Figur 8:: eine Variante des Falzwerkzeugs mit anderen Falzelementen.

Die Erfindung betrifft ein Falzwerkzeug (1), eine Erfassungseinrichtung (34) für beim Falzen auftretende Belastungen mit einer Anzeige (38) sowie eine Roboterfalzstation (44). Die Erfindung betrifft ferner ein Falzverfahren und ein Erfassungsverfahren.

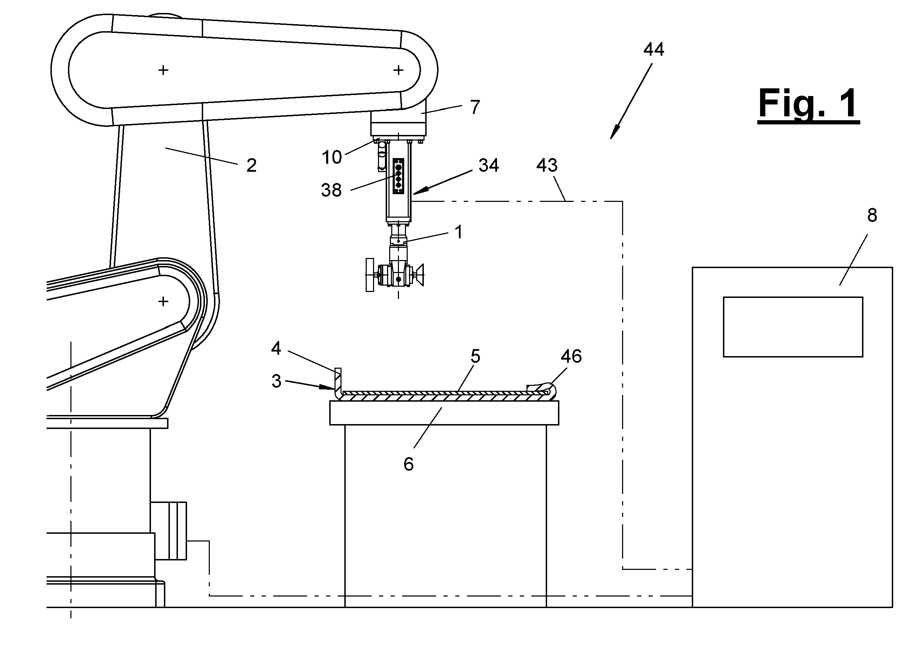

Das Falzwerkzeug (1) wird von einem mehrachsigen Manipulator (2) gehalten und relativ zu einem stationär oder ebenfalls beweglich gehaltenen Werkstück (3) geführt. Der Manipulator (2) und das Falzwerkzeug (1) sind Komponenten einer in Figur 1 beispielhaft dargestellten Roboterfalzstation (44).

Der mehrachsige Manipulator (2) ist z.B. als programmierbarer Roboter ausgebildet, der mehrere einzeln steuerbare rotatorische und/oder translatorische Achsen in beliebig geeigneter Kombination aufweist und der eine Hand bzw. Roboterhand (7) besitzt, an der das Falzwerkzeug (1) starr oder wechselbar befestigt ist. Der Roboter (2) ist z.B. als Gelenkarmroboter mit beispielsweise fünf oder sechs rotatorischen Achsen ausgebildet und kann ggf. Zusatzachsen haben. Der Manipulator oder Roboter (2) weist eine Robotersteuerung (8) auf. Der Manipulator oder Roboter (2) hat z.B. positionsgesteuerte Roboterachsen bzw. Achsantriebe.

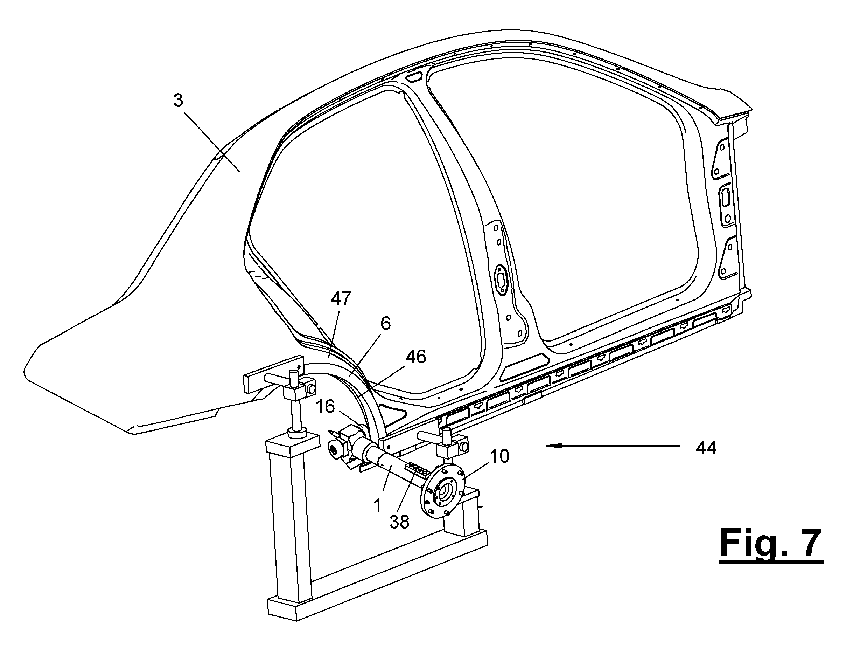

In Figur 7 ist eine andere Falzstation (44) gezeigt, bei der der Roboter (2) der Übersicht halber nicht dargestellt ist.

Das Falzwerkzeug (1) ist z.B. als Rollenfalzkopf mit rollenden Falzelementen (15,16,17) ausgebildet, kann alternativ aber eine andere Ausgestaltung mit gleitenden Falzelementen (17') oder dgl. aufweisen. Der Manipulator oder Roboter (2) bewegt das Falzwerkzeug (1) entlang einer vorprogrammierten Bahn relativ zum Werkstück (3), wobei mit dem Falzwerkzeug (1) ein Falzprozess durchgeführt und ein Falz (46) gebildet wird. Der Manipulator oder Roboter (2) stellt das Falzwerkzeug (1) zu und bringt auch die Falzkraft auf. Er presst dabei das Falzwerkzeug (1) mit einem Falzelement (15,16,17,17'), gegen das Werkstück (3). Der Falzprozess kann einstufig oder bevorzugt mehrstufig sein, wobei im Falle einer Mehrstufigkeit ein Werkstückrand in mehreren Schritten, z.B. einem Vorfalzschritt und einem Fertigfalzschritt, umgebogen wird. Dies kann wie im Ausführungsbeispiel von Figur 1 dargestellt ist, mit drückenden Falzkräften geschehen.

Figur 1 zeigt in einer vereinfachten Darstellung ein Werkstück (3), welches mehrteilig ausgebildet sein kann und z.B. aus einem Unterblech (4) und einem Oberblech (5) besteht, wobei im Falzprozess ein überstehender Flansch des einen Werkstückteils (4) umgebogen wird, z.B. um ca. 90° oder mehr. Figur 1 zeigt am linken Werkstückrand einen hochstehenden Randflansch des Unterblechs (4), der unter Bildung des rechts am Werkstückrand gezeigten Falzes (46) um das Oberblech (5) herum gebogen wird. Hierbei wird beispielsweise ein Tropfenflansch gebildet. Alternativ sind beliebige andere Falzformen und Falzprozesse mit z.B. drei, vier oder mehr Falzschritten möglich.

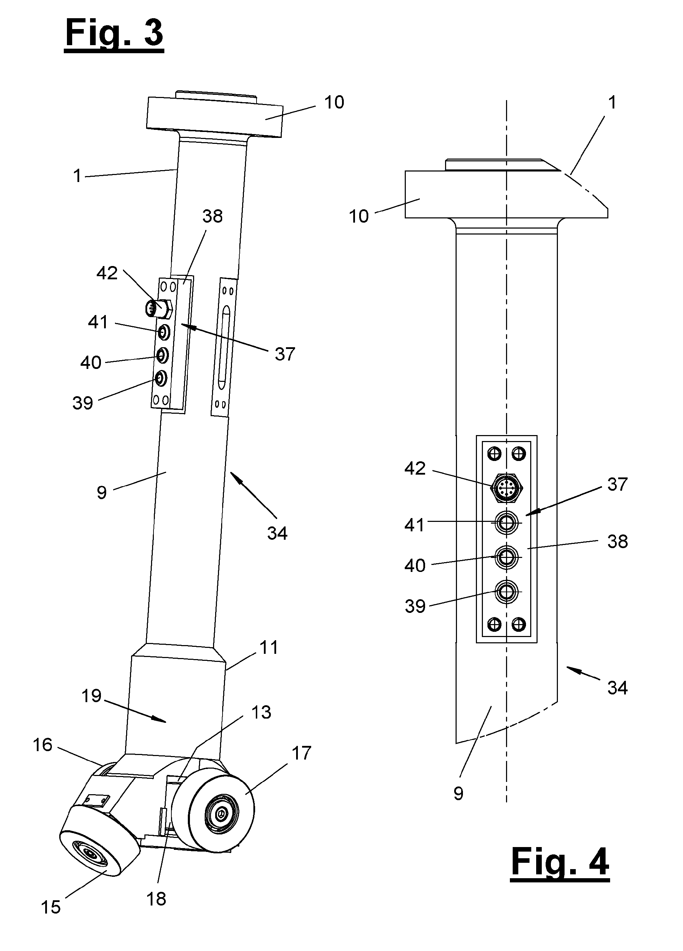

Das Falzwerkzeug (1) weist für die verschiedenen Falzschritte unterschiedliche Falzelemente auf, die in den gezeigten Ausführungsbeispielen von Figur 1 bis 8 als frei drehbare oder ggf. auch drehend angetriebene Falzrollen (15,16,17) ausgebildet sind. Hierbei kann es sich z.B. um zwei Vorfalzrollen (15) und zwei Fertigfalzrollen (16,17) handeln, die entsprechend der Falzschritte unterschiedliche Mantelkonturen aufweisen.

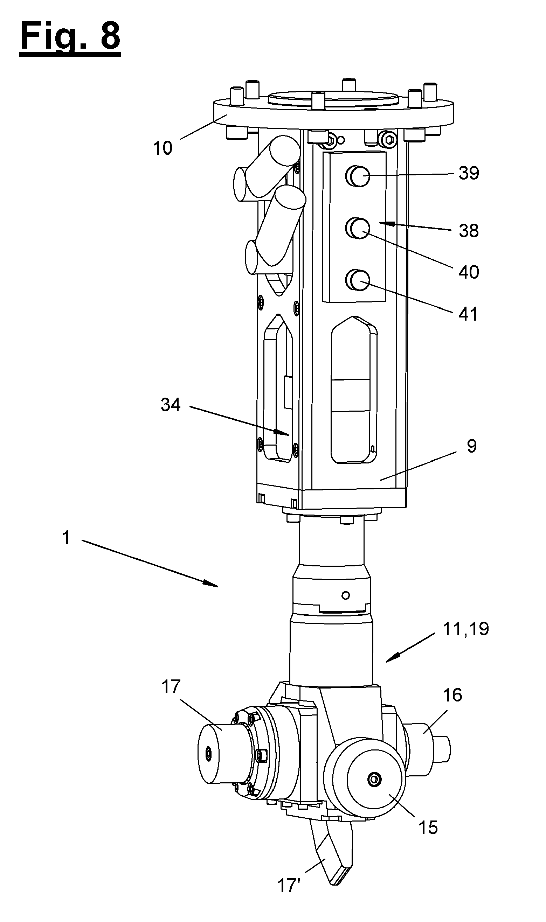

In der später erläuterten Variante von Figur 8 ist eine andere Form von Falzelementen gezeigt, bestehend aus einer Kombination von Falzrollen (15,16,17) und einem Falzstahl (17').

Während des Falzprozesses ist das Werkstück (3) an einem Falzbett (6) abgestützt. Dieses ist im Ausführungsbeispiel von Figur 1 stationär angeordnet. Figur 7 zeigt eine Variante mit einem beweglichen Falzbett (6), die nachfolgend näher beschrieben wird.

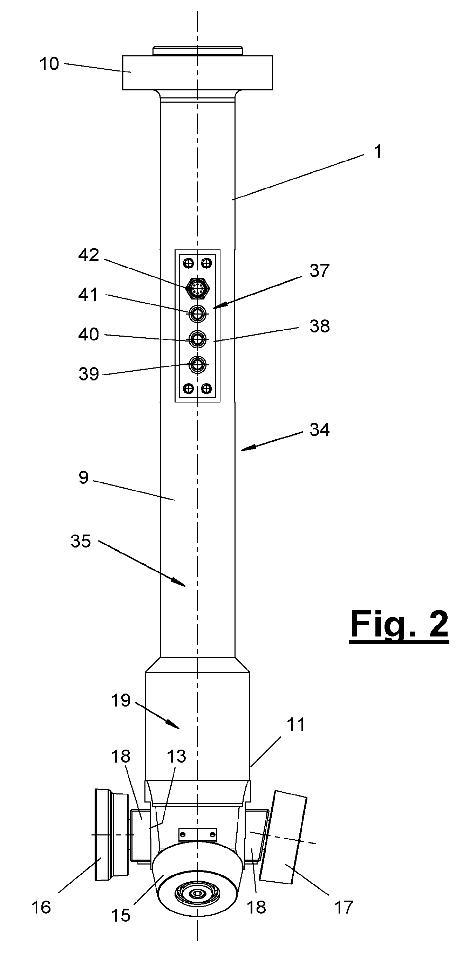

Figur 2 bis 4 zeigen ein Falzwerkzeug (1), insbesondere einen Rollenfalzkopf, in verschiedenen Ansichten. Das Falzwerkzeug (1) weist ein Gestell (9) mit einem Anschluss (10) auf, über den das Falzwerkzeug (1) mit der Roboterhand (7), insbesondere mit deren Abtriebsflansch, verbunden werden kann. Über den Anschluss (10) kann ggf. auch eine Medienübertragung (nicht dargestellt) stattfinden, wobei z.B. Leistungsströme und Signalströme, Druckluft oder dgl. übertragen werden.

Das Gestell (9) ist z.B. säulenartig ausgebildet und weist am oberen Ende den Anschluss (10) und am unteren Ende einen Falzelementträger, z.B. einen Rollenträger (11) auf, an dem die besagten Falzrollen (15,16,17) angeordnet sind. Sie befinden sich dabei an verschiedenen Seiten des Rollenfalzkopfes (1). Die eigentlichen Rollen sind an Rollenhaltern (18) angeordnet. Im gezeigten Ausführungsbeispiel sind die Fertigfalzrollen (16,17) mit einer nachfolgend näher beschriebenen ausweichfähigen Rollenlagerung (19) verbunden. Die Vorfalzrolle(n) (15) ist/sind hingegen relativ ortsfest am Rollenträger (11) gehalten und dabei drehbar gelagert.

In Abwandlung der gezeigten Ausführungsform können alle Falzrollen (15,16,17) relativ ortsfest am Rollenträger (11) gehalten und drehbar gelagert sein. Es ist aber auch möglich, für alle Falzrollen (15,16,17) eine ausweichfähige Rollenlagerung (19) vorzusehen. Daneben sind beliebige andere Zwischenkombinationen von relativ ortsfester und ausweichfähiger Rollenlagerung möglich.

Das Falzwerkzeug (1) weist eine Erfassungseinrichtung (34) mit einer Anzeige (38) für die Erfassung und Anzeige der beim Falzen auftretenden Belastungen auf. Die Erfassungseinrichtung (34) ist an geeigneter Stelle des Falzwerkzeug (1) angeordnet, z.B. im Gestell (9) und/oder an einem Falzelement (15,16,17,17'). Die Belastungen betreffen zum einen die beim Falzen durch die Werkzeugzustellung entstehenden Reaktionskräfte, die auf das Falzwerkzeug (1) und auf den Manipulator oder Roboter (2) und insbesondere auf dessen Achsen wirken. Die Belastungen betreffen auch Eindringtiefen des Falzwerkzeugs (1) am Werkstück (3).

Das Falzwerkzeug (1) besitzt einen sog. Tool-Center-Point (abgekürzt TCP), der den Wirkpunkt des Falzwerkzeugs (1) am Werkstück (3) und insbesondere an dessen Flansch (46) repräsentiert. Bei der Erstellung der Bewegungsbahn des Roboters (2) wird z.B. ein Bahnverlauf des Handwurzelpunktes oder TCP's der Roboterhand (7) programmiert und dabei den einzelnen Bahnpunkten jeweils ein Abstand des TCP's des Falzwerkzeugs (1) vom Hand- oder Flanschwurzelpunkt zugeordnet. Der programmierte Bahnverlauf beinhaltet somit auch eine Zustellung des Falzwerkzeugs (1) zum Werkstück (3), um die gewünschte Flanschbiegung in den verschiedenen Prozessabschnitten zu bewirken. Je nach Reaktion und Steifigkeit des Werkstücks (3) muss bei den verschiedenen Falzschritten das betreffende Falzelement (17') bzw. die Falzrolle (15,16,17) mehr oder weniger weit zugestellt werden.

Die Anfangsprogrammierung erfolgt z.B. offline und anhand der konstruktiven Werkstückdaten und der Formdaten des entsprechend genau gearbeiteten Falzbettes (6). Wenn sich in einem Probelauf beim Einrichten der Roboterfalzstation (44) zeigt, dass der vorprogrammierte Bahnverlauf nebst Zustellung zur Erzielung und Beibehaltung der gewünschten Flanschbiegung nicht ausreicht, kann ein Bediener die Programmierung verändern und nachstellen, insbesondere den Zustellweg vergrößern. Das in einem weiteren Probelauf erzielte Ergebnis wird anhand der Form des Flansches (46) begutachtet.

Bei der Nachstellung, die z.B. durch Veränderung des TCP-Beiwertes mit der Bahnsteuerung erfolgt, kann vom Bediener zunächst unbemerkt ein tatsächlicher Bahnverlauf des Falzwerkzeug-TCPs am Werkstück (3) programmiert werden, bei dem dieser TCP innerhalb des Werkstücks (3) liegt und bei dem das Falzwerkzeug (1) zu tief in das Werkstück (3) eindringen würde. Dies kann insbesondere beim Fertigfalzen und beim Anpressen des Falzendes gegen das Falzbett (6) ein Problem sein. Das Falzbett (6) und das Werkstück (3) geben nicht oder nur sehr wenig nach. Bei einer unvorsichtigen Programmierung werden evtl. auftretende übermäßige Eindringtiefen durch Eigenelastizitäten des Falzwerkzeugs (1) oder insbesondere des Manipulators (2) aufgenommen. Dies kann zu einem erhöhten Manipulator- oder Roboterverschleiss führen. Auch die Falzrollen (15,16,17) und andere Falzwerkzeugteile können überlastet werden.

Mit der Erfassungseinrichtung (34) werden derartige Belastungen detektiert und mit der Anzeige (38) dem Bediener signalisiert. Die Anzeige (38) ist bevorzugt als optische Anzeige ausgebildet und an der Außenseite des Falzwerkzeugs (1) für den Bediener sichtbar angeordnet. Sie befindet sich dabei in einem beim Falzen sichtbaren Bereich, z.B. am säulenartigen Gestell (9). In der gezeigten Ausführung ist die Anzeige (38) zwischen dem Anschluss (10) und dem Rollenträger (11) am Gestell (9) angeordnet. Der Anzeige (38) ist dabei z.B. starr mit dem Falzwerkzeug (1) verbunden.

Die Anzeige (38) ist bevorzugt als Bereichsanzeige ausgebildet, die verschiedene Belastungsbereiche signalisiert. Hierfür weist die Anzeige (38) mehrere unterschiedliche Anzeigeelemente (39,40,41) auf, die z.B. als verschiedenfarbige Leuchten, insbesondere LED's, ausgebildet sind, welche je nach Höhe der erfassten Belastung und des zugehörigen Belastungsbereichs aufleuchten. Die Farbgebung kann z.B. entsprechend einer Verkehrsampel Grün, Gelb und Rot sein. Beispielsweise werden drei unterschiedliche Anzeigeelemente (39,40,41) benutzt. Deren Zahl kann alternativ kleiner oder größer sein.

Die Ampelfarben der bevorzugten Ausgestaltung signalisieren mit der Farbe Grün die Existenz einer Belastung und damit auch eines Berührungskontakts zwischen Falzwerkzeug (1) und Werkstück (3). Wenn trotz programmierter Zustellung keine LED aufleuchtet, signalisiert dies einen mangelnden Kontakt, der möglicherweise auf einen Programmier- oder Werkzeugfehler zurückzuführen ist. Eine solche Situation kann sich beispielsweise bei einem Verlust oder Bruch einer Falzrolle ergeben.

Die Farbe Gelb signalisiert einen Bereich, in dem die auftretenden und gemessenen Belastungen tolerabel sind und sich zwischen einer minimal zulässigen und einer maximal zulässigen Belastung bewegen. Mit der roten Farbe kann ein Überschreiten des Belastungslimits signalisiert werden. Beim Probelauf während des Einrichtens kann der Bediener die Anzeige (38) ständig im Blick behalten und kontrollieren, ob die auftretenden Belastungen sich tatsächlich im zulässigen Bereich bewegen oder nicht. Er braucht dabei nur das Leuchtverhalten und die Farbgebung zu beobachten und kann ansonsten seine Aufmerksamkeit anderen Randbedingungen beim Einrichten zuwenden.

Die Erfassungseinrichtung (34) kann einen oder mehrere Sensoren (35) zum Messen einer für die Belastung repräsentativen physikalischen Größe und eine mit dem Sensor (35) verbundene Auswerteeinrichtung (37) aufweisen. Mit der Auswerteeinrichtung (37) werden die Messsignale empfangen, ausgewertet und ggf. interpretiert sowie den verschiedenen Anzeigebereichen und den zugehörigen Anzeigeelementen (39,40,41) zugeordnet. Die Auswerteeinrichtung (37) kann sich z.B. mit den Anzeigeelementen in einem Gehäuse der Anzeige (38) befinden. Eine Auswerteeinrichtung (37) kann alternativ oder zusätzlich auch extern angeordnet sein.

Die Anzeige (38) kann ein oder mehrere weitere Teile (42) aufweisen. Dies kann z.B. eine in den Zeichnungen dargestellte Schnittstelle für eine externe leitungsgebundene oder drahtlose Signalverbindung (43) zu einer anderen Steuerung, z.B. zu der Robotersteuerung (8), sein. Ein Teil (42) kann beispielsweise auch als Schalter zum Ein- oder Ausschalten, als Einstellelement für die Anzeige (38) oder die Auswerteeinrichtung (37) oder dgl. ausgebildet sein.

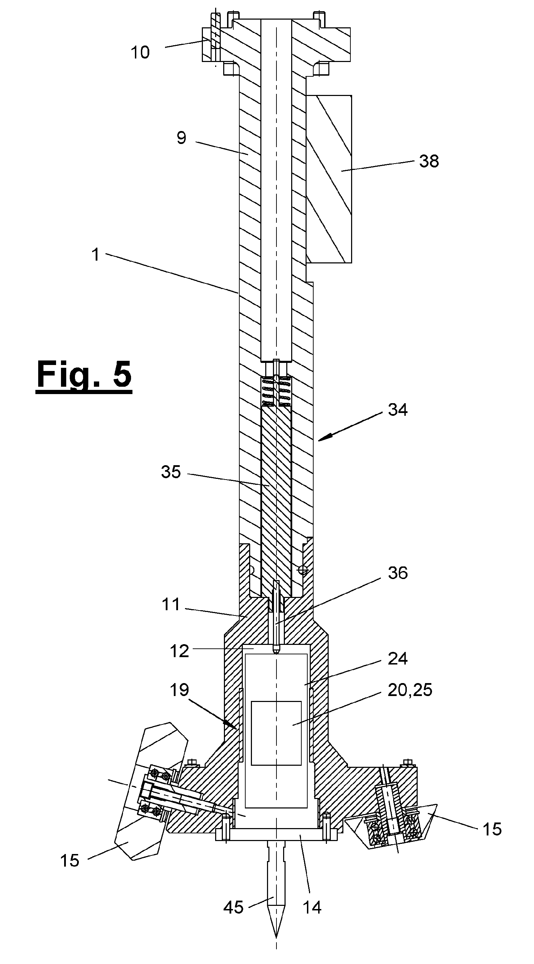

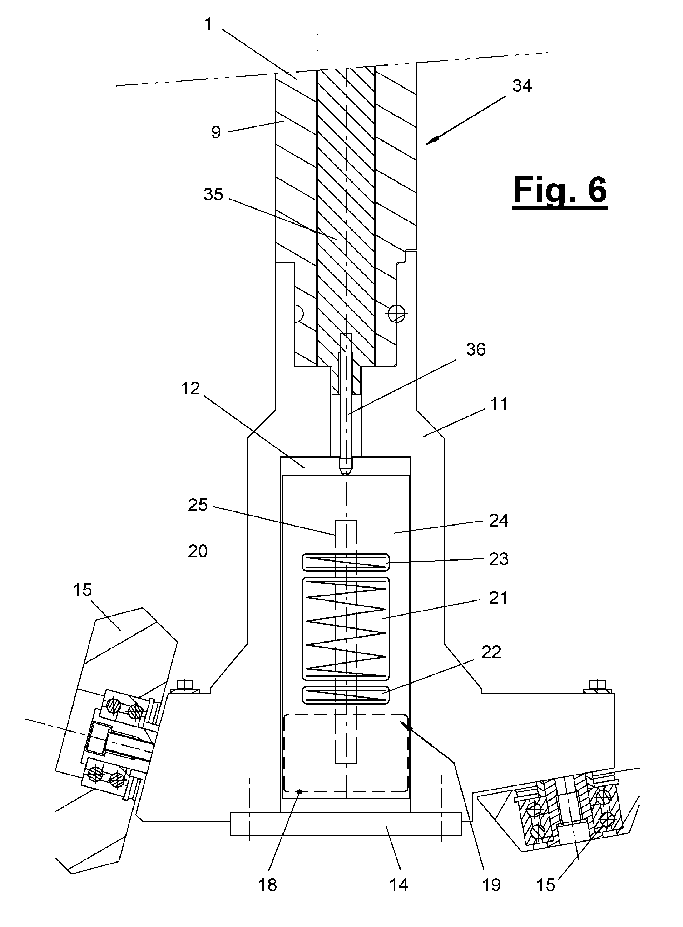

Figur 5 und 6 verdeutlichen in einem Längsschnitt das Innenleben des Falzwerkzeugs (1) und den Sensor (35). Dieser ist z.B. als Wegmesser ausgebildet und im zentralen Innenraum des hohlen Gestells (9) untergebracht. Der Sensor (35) kann ein Sensorgehäuse aufweisen, welches eine mittels einer Feder oder dgl. definierte Lage im Gestell (9) einnimmt. Aus dem Sensorgehäuse ragt ein axial beweglicher Taster (36) vor, der die z.B. bei einer ausweichfähigen Rollenlagerung (19) auftretenden Ausweichwege aufnimmt und an die Auswerteeinrichtung (37) meldet, welche die Messwerte ggf. in Kräftewerte umwandelt bzw. umrechnet. Hierbei berücksichtigt sie die Federsteifigkeit der ausweichfähigen Rollenlagerung (19). Die Auswerteeinrichtung (37) kann einstellbar oder programmierbar sein und kann somit unterschiedliche Vorgaben für Werkzeug und/oder Falzprozess, z.B. für verschiedene Federkennlinien, Einteilungen von Belastungs- und Anzeigebereichen, berücksichtigen.

Die ausweichfähige Rollenlagerung (19) ist in einem hohlen Innenraum (12) des Falzwerkzeugs (1), z.B. im Rollenträger (11) untergebracht. Dieser z.B. im wesentlichen zylindrischen Innenraum (12) ist zentral angeordnet und längs der besagten Werkzeuglängsachse ausgerichtet. Er ist nach unten zu den Falzrollen (15,16,17) hin offen und wird hier von einem lösbar verbundenen Deckel (14) geschlossen.

Die ausweichfähige Rollenlagerung (19) ist im gezeigten Ausführungsbeispiel nur für die Fertigfalzrollen (16,17) vorgesehen und ist mit deren Rollenhaltern (18) verbunden. Die Rollenhalter (18) greifen durch seitliche Wanddurchbrüche oder Fenster (13) des Rollenträgers (11) in den Innenraum (12) und sind dort mit der ausweichfähigen Rollenlagerung (19) verbunden.

Die ausweichfähige Rollenlagerung (19) weist eine Federanordnung (20) mit einer gestellfesten Federabstützung (25) und einem mit dem oder den Rollenhaltern (18) verbundenen Federaktor (24) auf.

Die Federanordnung (20) weist mehrere unterschiedlich steife Federn (21,22,23) auf, die gemäß Figur 5 und 6 in Reihe geschaltet sind, wobei sie längs der Zentralachse des Falzwerkzeugs (1) ausgerichtet sind. Hierbei ist eine harte oder steife Feder (21) zwischen zwei weicheren oder weniger steifen Federn (22,23) angeordnet. Die Federn (21,22,23) sind z.B. als Ringfedern oder Scheibenfedern ausgebildet und sind axial auf der Federabstützung (25) geführt.

Der Federaktor (24) umgibt die Federanordnung (20) und kontaktiert den Taster (36). Die Aktorbewegungen werden hierüber an den Sensor (35) übermittelt.

Die gezeigte ausweichfähige Rollenlagerung (19) wirkt in zwei entgegengesetzten Richtungen, die bevorzugt mit der zentralen Längsachse des Falzwerkzeugs (1) zusammenfallen bzw. in einer anderen Ausführung parallel dazu ausgerichtet sind. Die Ausrichtung erstreckt sich auch längs der Zustellrichtung des Falzwerkzeugs (1) gegenüber dem Werkstück (3) im drückenden Betrieb gemäß Figur 1 und auch im ziehenden Betrieb gemäß Figur 7.

Wenn die beim Falzen beaufschlagte Falzrolle, insbesondere Fertigfalzrolle (16,17), mit dem Werkstück (3) in Eingriff tritt und auf Grund der Zustellung mit Druck- oder Zugkräften belastet wird, überträgt sie diese mittels des Rollenhalters (18) auf den Federaktor (24), der entsprechend mitgenommen wird und dabei auf die von der gestellfesten Federabstützung (25) gehaltene Federanordnung (20) einwirkt. Im drückenden Betrieb wird der Federaktor (24) gemäß Figur 5 und 6 nach oben und zum Anschluss (10) hin geschoben, wobei er zunächst die untere weiche Feder (22) komprimiert. Bei einer weiterführenden Bewegung wird die mittlere harte Feder (21) komprimiert.

Diese Rollen- und Aktorbewegungen werden auf den Taster (36) übertragen. Die weiche Feder (22) setzt der Rollen- und Aktorbewegung nur geringen Widerstand entgegen und kann vorrangig dazu dienen, einen Kontakt zwischen Falzwerkzeug (1) und Werkstück (3) zu detektieren, wobei der zugehörige Rollen- oder Aktorweg dem ersten Anzeigebereich und der z.B. grünen LED zugeordnet wird.

Die mittlere steife Feder (21) kann der Erfassung der beim Falzen aufgebrachten Prozesskräfte dienen und durch eine geeignete Vorspannung entsprechend ausgelegt sein. Die Federvorspannung kann die untere Kraftschwelle zum Falzen, insbesondere Fertigfalzen, repräsentieren. Die obere Kraftschwelle wird z.B. in den mittleren Federwegbereich und vor die Blockstellung der Feder (21) gelegt. Sie wird durch einen entsprechenden Federweg sowie Ausweichweg des Federaktors (24) und des Tasters (36) repräsentiert. Der Wegbereich zwischen der oberen und unteren Kraftschwelle wird mit der mittleren Bereichsanzeige und der z.B. gelben LED verbunden. Nach Überschreiten der oberen Kraft- oder Wegschwelle erfolgt ein Umschalten in den dritten Anzeigebereich und die rote Farbgebung.

Die gezeigte ausweichfähige Rollenanordnung (19) und der Federaktor (24) sind auch bei ziehendem Betrieb wirksam, wobei der Taster (36) des Sensors (35) entsprechend im mittleren Bereich seines Ausfahrwegs eingestellt ist und unter Federvorspannung oder dgl. steht.

Wenn auf eine Falzrolle (16,17) eine ziehende Kraft einwirkt, wandert der Federaktor (24) nach unten und vom Anschluss (10) weg, wobei der Federaktor (24) zunächst die obere weiche Feder (23) komprimiert und ab der Abschlagstellung die mittlere steife Feder (21) komprimiert. Die Belastungserfassung und -anzeige entspricht dem vorbeschriebenen Beispiel für Druckbetrieb.

Figur 7 verdeutlicht einen solchen ziehenden Falzbetrieb bei einem Werkstück (3), welches als Karosserieseitenwand ausgebildet ist und ein Radhaus (47) aufweist, an dessen Innenseite der Flansch (46) gebildet werden soll. Das Falzwerkzeug (1) greift von außen in die Radhausöffnung, wobei die Falzrolle (15,16,17) den Radhausrand hintergreift, innenseitig angedrückt und das Falzwerkzeug (1) auf Zug belastet wird. Die Abstützung der Falzkräfte erfolgt durch ein mobiles Falzbett (6), welches am Randbereich des Radhauses (47) anliegt.

Figur 8 zeigt eine Variante eines Falzwerkzeugs (1), welches andere Falzelemente (15,16,17,17') aufweist, ansonsten aber die gleiche Ausbildung wie in den vorbeschriebenen Ausführungsbeispielen haben kann. Ein Falzelement ist bei der gezeigten Variante als starrer und formsteifer Falzstahl bzw. Falzbacke (17') ausgebildet. Ein solches Falzelement (17') kann z.B. zum Nachpressen des umgebogenen Falzes an besonders kritischen Stellen dienen. Dies können Ecken oder scharf gekrümmte Stellen im Falzverlauf sein. Der Manipulator (2) führt dabei ggf. nur eine quer zum umgebogenen Flansch gerichtete drückende oder ziehende Zustellbewegung mit dem Falzelement (17') aus. Der Manipulator (2) kann aber auch ein entsprechend gestaltetes starres Falzelement (17') gleitend entlang des Falz- oder Flanschverlaufes bewegen und dabei drückend oder ziehend gegen das Werkstück (3) pressen.

In Abwandlung der gezeigten Ausführungsform kann ein solches Falzelement (17') auch als Druck- oder Ziehstempel, profilierte Backe oder dgl. ausgebildet sein. Es kann insbesondere an Stelle oder in Ergänzung eines bei konventionellen Falzstationen vorhandenen und am Falzbett angeordneten Eckenschiebers eingesetzt werden. Es kann auch zum Vor- und Fertigfalzen eingesetzt werden.

In der gezeigten Ausführungsform von Figur 8 hat das Falzwerkzeug (1) außerdem noch eine oder mehrere Falzrollen (15,16,17) der vorbeschriebenen Art, die frei drehbar oder angetrieben sein können. Die Falzelemente (15,16,17,17') sind gemeinsam an einem Falzelementträger (11) angeordnet und dabei nach verschiedenen Seiten ausgerichtet. Sie werden durch entsprechende Roboterbewegungen in Arbeitsposition gebracht.

Das Falzwerkzeug (1) kann eine Erfassungseinrichtung (34) der vorbeschriebenen Art aufweisen, mit der auch die am starren Falzelement (17') eingeleiteten Reaktionskräfte oder Reaktionsmomente durch eine geeignete Sensorik erfasst werden können. Ein starres Falzelement (17') kann ebenfalls eine starre oder eine ausweichfähige Lagerung der vorbeschriebenen Art haben, wobei die Erfassungseinrichtung (34) entsprechend angepasst ist. Das Falzwerkzeug (1) weist außerdem eine Anzeige (38) der vorbeschriebenen Art auf, die in Figur 8 vereinfacht dargestellt ist.

Aus Figur 8 ist außerdem ein anderer Aufbau des Gestells (9) ersichtlich, dessen oberer Teil als Rechteckgehäuse mit einer teilweise durchbrochenen Wandung ausgebildet ist. An dessen Oberseite ist der Anschluss (10) angeordnet und an der Unterseite ein säulenartiger Gestellfortsatz mit dem Falzelementträger (11) angeflanscht. Durch die vorgenannten Gestellöffnungen können Leitungen für Betriebsmittel zu den innenliegenden Werkzeugteilen geführt werden.

In Variation zu der gezeigten Kombination von Falzelementen (15,16,17,17') kann ein Falzwerkzeug (1) ohne Falzrollen auskommen und nur ein oder mehrere andere, z.B. starre Falzelemente (17') aufweisen. Ferner können Zahl und Anordnung der Falzelemente (15,16,17,17') variieren.

Abwandlungen der gezeigten und beschriebenen Ausführungsformen sind in verschiedener Weise möglich. Zum einen kann ein nach dem eingangs genannten Stand der Technik ausgebildetes Falzwerkzeug statt mit einer Ziffernanzeige mit einer Bereichsanzeige ausgerüstet werden. Die Anzeige (38) kann dabei wie beim Stand der Technik außerhalb vom Falzwerkzeug (1) und ggf. mobil angeordnet sein. In einer weiteren Abwandlung kann eine Anzeige (38) in der vorbeschriebenen Weise am Falzwerkzeug (1) angeordnet und mit diesem ggf. fest verbunden sein, wobei die Art der Anzeige variieren kann. Es kann sich um die vorbekannte Ziffernanzeige handeln. Es können aber auch eine andere Art, Anzahl und/oder Anordnung von Anzeigeelementen (39,40,41) eingesetzt werden. Die Anzeigeart kann alternativ oder zusätzlich akustisch sein. In einer anderen Variante kann ein Falzwerkzeug (1) mit der gezeigten nach mehreren Richtungen ausweichfähigen Rollenlagerung (19) ohne Erfassungseinrichtung (34) und ohne Anzeige (38) ausgebildet sein.

Ferner ist es in einer Variante möglich, die Erfassungseinrichtung (34) und die Anzeige (38) mit einer nur nach einer Seite oder Richtung ausweichfähigen Rollenlagerung zu kombinieren. Außerdem ist es möglich, den einfach oder mehrfach vorhandenen Sensor (35) abzuwandeln und z.B. eine Kombination von einem Wegesensor und einem Kraftsensor vorzusehen, die ggf. an verschiedenen Stellen des Falzwerkzeugs (1) angeordnet sind. Hierbei kann z.B. ein Kraftsensor in Form einer Druckmessdose, einer Dehnungsmessstreifenanordnung (DMS) oder dgl. im Bereich des Rollenträgers (11) oder einer ggf. ortsfesten und dabei drehbaren Rollenlagerung angeordnet sein. Hierbei kann ggf. auf eine ausweichfähige Rollenlagerung verzichtet werden. Abwandelbar ist ferner die konstruktive Ausbildung einer ausweichfähigen Rollenlagerung (19). Diese kann auch außerhalb des Gestells (9) bzw. Rollenträgers (11) angeordnet sein. Die Falzrollen können dabei ggf. jeweils eigene ausweichfähige Lagerungen haben.

### BEZUGSZEICHENLISTE

- 1: Falzwerkzeug, Rollenfalzkopf
- 2: Manipulator, Roboter
- 3: Werkstück
- 4: Werkstückteil, Unterblech
- 5: Werkstückteil, Oberblech
- 6: Falzbett
- 7: Hand, Roboterhand
- 8: Steuerung, Robotersteuerung
- 9: Gestell
- 10: Anschluss
- 11: Falzelementträger, Rollenträger
- 12: Öffnung, Innenraum
- 13: Fenster
- 14: Deckel
- 15: Falzelement, Falzrolle, Vorfalzrolle
- 16: Falzelement, Falzrolle, Fertigfalzrolle
- 17: Falzelement, Falzrolle, Fertigfalzrolle
- 17': Falzelement, Falzstahl, Falzbacke
- 18: Rollenhalter
- 19: ausweichfähige Rollenlagerung
- 20: Federanordnung
- 21: Feder hart
- 22: Feder weich
- 23: Feder weich
- 24: Federaktor
- 25: Federabstützung
- 26:
- 27:
- 28:
- 29:
- 30:
- 31:
- 32:
- 33:
- 34: Erfassungseinrichtung
- 35: Sensor, Wegmesser
- 36: Taster
- 37: Auswerteeinrichtung
- 38: Anzeige
- 39: Anzeigeelement, LED
- 40: Anzeigeelement, LED
- 41: Anzeigeelement, LED
- 42: Anzeigeteil, Schnittstelle, Schalter
- 43: Signalverbindung
- 44: Roboterfalzstation
- 45: Zentrierdorn
- 46: Falz, Flansch
- 47: Radhaus

## Patentansprüche

1. Manipulatorgeführtes Falzwerkzeug, insbesondere Rollenfalzkopf, wobei das Falzwerkzeug (1) ein Gestell (9) mit einem Falzelement (15,16,17,17') und mit einem Anschluss (10) zur Verbindung mit einem Manipulator oder Roboter (2) sowie eine Erfassungseinrichtung (34) für die beim Falzen auftretenden Belastungen aufweist, wobei die Erfassungseinrichtung (34) eine Anzeige (38) für die Belastungen aufweist, **dadurch gekennzeichnet, dass** die Anzeige (38) am Falzwerkzeug (1) angeordnet ist.

2. Falzwerkzeug nach Anspruch 1, **dadurch gekennzeichnet, dass** die Anzeige (38) als optische Anzeige ausgebildet und in einem beim Falzen sichtbaren Bereich am Falzwerkzeug (1) angeordnet ist.

3. Falzwerkzeug insbesondere nach Anspruch 1 oder 2, **dadurch gekennzeichnet, dass** die Anzeige (38) als Bereichsanzeige für verschiedene Belastungsbereiche ausgebildet ist,

4. Falzwerkzeug nach Anspruch 1, 2 oder 3, **dadurch gekennzeichnet, dass** die Anzeige (38) mehrere unterschiedliche Anzeigeelemente (39,40,41), insbesondere verschiedenfarbige Leuchten, aufweist.

5. Falzwerkzeug nach einem der vorhergehenden Ansprüche, **dadurch gekennzeichnet, dass** das Falzwerkzeug (1) mit einem Falzelement (15,16,17,17') dazu ausgebildet ist, von einem Manipulator oder Roboter (2) drückend oder ziehend gegen ein Werkstück gepresst zu werden, wobei der Manipulator oder Roboter (2) die Falzkraft aufbringt.

6. Falzwerkzeug nach einem der vorhergehenden Ansprüche, **dadurch gekennzeichnet, dass** die Erfassungseinrichtung (34) nur die Belastungen beim Fertigfalzen erfasst und anzeigt.

7. Falzwerkzeug nach einem der vorhergehenden Ansprüche, **dadurch gekennzeichnet, dass** das Falzwerkzeug (1) eine ausweichfähige Anordnung von Falzelementen (15,16,17,17'), insbesondere Falzrollen, aufweist, wobei die Erfassungseinrichtung (34) den Ausweichweg misst.

8. Falzwerkzeug nach einem der vorhergehenden Ansprüche, **dadurch gekennzeichnet, dass** die Erfassungseinrichtung (34) einen mit der Lagerung (19) verbundenen Sensor (35) zur Wegmessung aufweist.

9. Falzwerkzeug nach einem der vorhergehenden Ansprüche, **dadurch gekennzeichnet, dass** die Erfassungseinrichtung (34) eine Auswerteeinrichtung (37) zur Umwandlung von Wegmesswerten in Kräftewerte und/oder zur Wertezuordnung zu verschiedenen Anzeigebereiche aufweist.

10. Falzwerkzeug nach einem der vorhergehenden Ansprüche, **dadurch gekennzeichnet, dass** die ausweichfähige Lagerung (19) für ein oder mehrere Falzelemente (15,16,17,17'), insbesondere Falzrollen, eine Federanordnung (20) mit mehreren unterschiedlich steifen Federn (21,22,23) aufweist.

11. Falzwerkzeug nach einem der vorhergehenden Ansprüche, **dadurch gekennzeichnet, dass** die Federanordnung (20) auf einer gestellfesten Federabstützung (25) geführt und von einem Federaktor (24) mit beidseitiger Wirkung beaufschlagt ist, wobei der Federaktor (24) mit mindestens einem Falzelement (15,16,17,17'), insbesondere mindestens einer Falzrolle (16,17), und mit dem Sensor (35) verbunden ist.

12. Falzwerkzeug nach einem der vorhergehenden Ansprüche, **dadurch gekennzeichnet, dass** die Erfassungseinrichtung (34) eine Signalverbindung (43) zu einer externen Steuerung (8), insbesondere einer Robotersteuerung, aufweist.

13. Roboterfalzstation mit einem mehrachsigen Manipulator (2), insbesondere einem programmierbaren Roboter, und mit einem am Manipulator (2) angeordneten Falzwerkzeug (1), insbesondere Rollenfalzkopf, das ein Gestell (9) mit einem Falzelement (15,16,17,17') und mit einem Anschluss (10) zur Verbindung mit dem Manipulator (2) sowie eine Erfassungseinrichtung (34) für die beim Falzen auftretenden Belastungen besitzt, wobei die Erfassungseinrichtung (34) eine Anzeige (38) für die Belastungen aufweist, **dadurch gekennzeichnet, dass** das Falzwerkzeug (1) nach mindestens einem der Ansprüche 1 bis 12 ausgebildet ist.

14. Verfahren zum Falzen von Werkstücken (3), wobei ein Manipulator oder Roboter (2) ein Falzwerkzeug (1), insbesondere einen Rollenfalzkopf, mit einem Gestell (9) und einem Falzelement (15,16,17,17') führt und gegen das Werkstück (3) presst, wobei die beim Falzen auftretenden Belastungen erfasst und angezeigt werden, **dadurch gekennzeichnet, dass** die Belastungen mit einer am Falzwerkzeug (1) angeordneten Anzeige (38) angezeigt werden.

15. Verfahren nach Anspruch 14, **dadurch gekennzeichnet, dass** die Belastungen des Falzwerkzeugs (1) im Gestell (9) oder an einem Falzelement (15,16,17) erfasst und optisch angezeigt werden.

## Claims

1. Manipulator-guided folding tool, in particular a roller folding head, the folding tool (1) having a frame (9) with a folding element (15, 16, 17, 17') and with a connection (10) for connecting to a manipulator or robot (2), and also having a detecting device (34) for the loads that occur during folding, the detecting device (34) having an indicator (38) for the loads, **characterized in that** the indicator (38) is arranged on the folding tool (1).

2. Folding tool according to Claim 1, **characterized in that** the indicator (38) is formed as an optical indicator and is arranged in an area on the folding tool (1) that is visible during folding.

3. Folding tool in particular according to Claim 1 or 2, **characterized in that** the indicator (38) is formed as a range indicator for different load ranges.

4. Folding tool according to Claim 1, 2 or 3, **characterized in that** the indicator (38) has a number of different indicating elements (39, 40, 41), in particular differently coloured lights.

5. Folding tool according to one of the preceding claims, **characterized in that** the folding tool (1) is formed with a folding element (15, 16, 17, 17') for the purpose of being pressed by a manipulator or robot (2) against a workpiece in a pushing or pulling manner, the manipulator or robot (2) applying the folding force.

6. Folding tool according to one of the preceding claims, **characterized in that** the detecting device (34) only detects and indicates the loads during final folding.

7. Folding tool according to one of the preceding claims, **characterized in that** the folding tool (1) has a yielding arrangement of folding elements (15, 16, 17, 17'), in particular folding rollers, the detecting device (34) measuring the yielding displacement.

8. Folding tool according to one of the preceding claims, **characterized in that** the detecting device (34) has a sensor (35), connected to the mounting (19), for measuring the displacement.

9. Folding tool according to one of the preceding claims, **characterized in that** the detecting device (34) has an evaluating device (37) for converting measured distance values into force values and/or for assigning values to different indicating ranges.

10. Folding tool according to one of the preceding claims, **characterized in that** the yielding mounting (19) for one or more folding elements (15, 16, 17, 17'), in particular folding rollers, has a spring arrangement (20) with a number of springs (21, 22, 23) of different stiffnesses.

11. Folding tool according to one of the preceding claims, **characterized in that** the spring arrangement (20) is guided on a spring support (25) fixed to the frame and is acted upon from both sides by a spring actuator (24), the spring actuator (24) being connected to at least one folding element (15, 16, 17, 17'), in particular at least one folding roller (16, 17), and to the sensor (35).

12. Folding tool according to one of the preceding claims, **characterized in that** the detecting device (34) has a signal connection (43) to an external control (8), in particular a robot control.

13. Robot folding station with a multiaxial manipulator (2), in particular a programmable robot, and with a folding tool (1) arranged on the manipulator (2), in particular a roller folding head, which has a frame (9) with a folding element (15, 16, 17, 17') and with a connection (10) for connecting to the manipulator (2), and also having a detecting device (34) for the loads that occur during folding, the detecting device (34) having an indicator (38) for the loads, **characterized in that** the folding tool (1) is formed according to at least one of Claims 1 to 12.

14. Method for folding workpieces (3), a manipulator or robot (2) guiding a folding tool (1), in particular a roller folding head, with a frame (9) and a folding element (15, 16, 17, 17') and pressing it against the workpiece (3), the loads that occur during the folding being detected and indicated, **characterized in that** the loads are indicated by an indicator (38) arranged on the folding tool (1).

15. Method according to Claim 14, **characterized in that** the loads of the folding tool (1) are detected in the frame (9) or on a folding element (15, 16, 17) and indicated optically.

## Revendications

1. Outil de pliage guidé par un manipulateur, notamment tête de pliage par rouleaux, l'outil de pliage (1) comportant un châssis (9) équipé d'un élément de pliage (15, 16, 17, 17') et d'un raccordement (10) réalisant la liaison avec un manipulateur ou robot (2) ainsi qu'un dispositif de détection (34) des charges se produisant lors du pliage, le dispositif de détection (34) comportant un affichage (38) des charges, **caractérisé en ce que** l'affichage (38) est disposé au niveau de l'outil de pliage (1).

2. Outil de pliage selon la revendication 1, **caractérisé en ce que** l'affichage (38) prend la forme d'un affichage optique et est disposé au niveau de l'outil de pliage (1), dans une zone visible lors du pliage.

3. Outil de pliage notamment selon la revendication 1 ou 2, **caractérisé en ce que** l'affichage (38) prend la forme d'un affichage de zone pour différentes zones de charge.

4. Outil de pliage selon la revendication 1, 2 ou 3, **caractérisé en ce que** l'affichage (38) comporte plusieurs éléments d'affichage (39, 40, 41) différents, notamment des éclairages de différentes couleurs.

5. Outil de pliage selon l'une quelconque des revendications précédentes, **caractérisé en ce que** l'outil de pliage (1) est réalisé pour un élément de pliage (15, 16, 17, 17'), de façon à être comprimé ou tiré contre une pièce usinée par un manipulateur ou robot (2), le manipulateur ou robot (2) appliquant la force de pliage.

6. Outil de pliage selon l'une quelconque des revendications précédentes, **caractérisé en ce que** le dispositif de détection (34) ne détecte et n'affiche que les charges s'exerçant lors du pliage fini.

7. Outil de pliage selon l'une quelconque des revendications précédentes, **caractérisé en ce que** l'outil de pliage (1) comporte un agencement pouvant dévier des éléments de pliage (15, 16, 17, 17'), notamment des rouleaux de pliage, le dispositif de détection (34) mesurant la course de déviation.

8. Outil de pliage selon l'une quelconque des revendications précédentes, **caractérisé en ce que** le dispositif de détection (34) comporte un capteur (35) relié au positionnement (19) pour mesurer la course.

9. Outil de pliage selon l'une quelconque des revendications précédentes, **caractérisé en ce que** le dispositif de détection (34) comporte un dispositif d'analyse (37) servant à convertir des valeurs de mesure de course en valeurs d'effort et/ou à associer des valeurs à différentes zones d'affichage.

10. Outil de pliage selon l'une quelconque des revendications précédentes, **caractérisé en ce que** le positionnement (19) pouvant dévier d'un ou plusieurs éléments de pliage (15, 16, 17, 17'), notamment des rouleaux de pliage, comporte un agencement de ressort (20) doté de plusieurs ressorts (21, 22, 23) de différentes rigidités.

11. Outil de pliage selon l'une quelconque des revendications précédentes, **caractérisé en ce que** l'agencement de ressort (20) est guidé sur un support à ressort (25) fixé au châssis et chargé par un actionneur à ressort (24) agissant des deux côtés, l'actionneur à ressort (24) étant relié à au moins un élément de pliage (15, 16, 17, 17'), notamment à au moins un rouleau de pliage (16, 17), et au capteur (35).

12. Outil de pliage selon l'une quelconque des revendications précédentes, **caractérisé en ce que** le dispositif de détection (34) comporte une liaison du signal (43) avec un élément de commande (8) externe, notamment un élément de commande de robot.

13. Station de pliage de robot dotée d'un manipulateur (2) pluriaxial, notamment d'un robot programmable et d'un outil de pliage (1) disposé au niveau du manipulateur (2), notamment d'une tête de pliage par rouleaux possédant un châssis (9) équipé d'un élément de pliage (15, 16, 17, 17') et d'un raccordement (10) réalisant la liaison avec le manipulateur (2) ainsi qu'un dispositif de détection (34) des charges survenant lors du pliage, le dispositif de détection (34) comportant un affichage (38) des charges, **caractérisée en ce que** l'outil de pliage (1) est réalisé selon au moins l'une quelconque des revendications 1 à 12.

14. Procédé de pliage de pièces usinées (3), un manipulateur ou robot (2) guidant un outil de pliage (1), notamment une tête de pliage par rouleaux, équipée d'un châssis (9) et d'un élément de pliage (15, 16, 17, 17') et appuyant contre la pièce usinée (3), les charges survenant lors du pliage étant détectées et affichées, **caractérisé en ce que** les charges sont affichées au moyen d'un affichage (38) disposé au niveau de l'outil de pliage (1).

15. Procédé selon la revendication 14, **caractérisé en ce que** les charges de l'outil de pliage (1) sont déterminées dans le châssis (9) ou au niveau d'un élément de pliage (15, 16, 17) et sont affichées optiquement.
